Europäisches Patentamt

European Patent Office

Office européen des brevets

(19)

(11) Publication number: **0 051 171**
**B1**

## (12) EUROPEAN PATENT SPECIFICATION

(45) Date of publication of patent specification: **13.02.85**

(21) Application number: **81108228.8**

(22) Date of filing: **12.10.81**

(51) Int. Cl.⁴: **A 23 L 1/16,** A 23 L 3/02,
A 23 L 3/14, A 23 L 3/18

(54) **Method of conditioning and conserving filled dough food products.**

(30) Priority: **31.10.80 US 202707**

(43) Date of publication of application:
**12.05.82 Bulletin 82/19**

(45) Publication of the grant of the patent:
**13.02.85 Bulletin 85/07**

(84) Designated Contracting States:
**AT BE CH DE FR GB LI NL SE**

(56) References cited:
**DE-A-1 492 709**
**DE-A-1 807 910**
**US-A-3 281 248**

(73) Proprietor: **Fioravanti, Mario**
**Via Zuccoli, 26**
**I-20100 Milano (IT)**

(72) Inventor: **Fioravanti, Mario**
**Via Zuccoli, 26**
**I-20100 Milano (IT)**

(74) Representative: **Modiano, Guido et al**
**MODIANO & ASSOCIATI S.A.S. Via Meravigli, 16**
**I-20123 Milan (IT)**

Courier Press, Leamington Spa, England.

## Description

This invention relates to a method of conditioning the filler contained in filled dough food products.

Filled or stuffed dough food products refers herein to those food products which comprise relatively small casings of dough, of any geometrical or fancy shapes, filled with a mixture or "emulsion" of chopped meat, vegetables, cheese, spices, etc., and best known by their traditional names of "ravioli", "tortellini", "cappelletti", "canelloni", etc.

The filler or filling of the above filled dough food products may be broadly related to the sausage class of food products in that it comprises a lump of meat, or other mixture, wrapped in a sheet of fresh-made dough. Similarly to sausages, the flavor of the filler of filled dough food products is improved by an adequate conditioning treatment. However, a special problem is encountered in the instance of filled dough products: in fact, the seasoning process, while improving the taste quality of the filler by enhancing its flavor, brings about a deterioration of the appearance and properties of the casing formed from dough.

Treatments are known for preserving, over a short or long peiod of time, such filled dough food products by drying thereof (which drying process would generally continue spontaneously even after the drying treatment proper has been completed), but it is also known that this resulted in the dough casings becoming brittle, developing cracks, and finally crumbling thereby their appearance made them totally unsuitable for sale.

Moreover, a deep drying treatment could damage the filler as well as the dough casing, because, as is well known in the art, dehydrated meat does not "recover" with the simple addition of water, not even boiling water. Lastly, the deep drying effect brought about by conventional preservation methods also resulting in an undue loss of weight, and consequently in an increased cost of the product.

Various methods, intended to provide a similar treatment to conditioning, are known, that is methods for preserving such filled dough food products over more or less prolonged periods of time.

Such known methods ranged from the canning of the product in savory sauces, to deep freezing or drying. None of these methods has been successful in practice from the standpoint of mass production requirements owing to various disadvantages.

Thus, canned products, in addition to forcing upon the consumer the flavour (not always preferred) of ready-made sauces, tend to develop a soaked and softened condition of the dough, which can no longer have its generally preferred tough consistency.

On the other hand, deep freezing encourages cracking and disgregation of dough owing to the surface dehydration caused by the application of cold. Moreover, deep freezing involves high refrigeration costs for production, distribution, and conservation.

Finally, dehydration is likely to result in the dough developing surface cracks, in the deterioration of the filler owing to the high temperatures involved, in a degradation of the flavor due to partial evaporation of spices, in an increased cost of the product due to the loss of weight brought about by the drying process, and so forth.

Therefore, the methods proposed heretofore for preserving or conserving filled dough food products have failed to enhance the product flavor as provided by proper seasoning.

In addition thereto, such conventional conservation methods resulted in final products which were not entirely satisfactory even from other points of view. Thus, for example, the method disclosed in US Patent No. 3,281,248 which provided a wet type of high temperature treatment for filled dough food products, resulted in final products the dough casing whereof had a hard, marble-like consistency, such that the product would bounce on a hard surface, such as a table top.

DE—A—1 807 910 discloses processing of non filled dough food products with steam and subsequent drying.

This invention is mainly directed to obviating the drawbacks of known methods of preserving or conserving filled dough food products or articles, by providing a treatment for the filler of filled dough products which affords a proper conditioning thereof, while ensuring a desired quality and appearance of the related dough casing over prolonged periods of time.

A further object of this invention is to provide a method of conditioning the filler of filled dough food products or articles, which is highly reliable not only on account of the prolonged conservation of the product made possible thereby, but also because of the visual check of the state of conservation of the product afforded thereby.

These and other objects, such as will be apparent hereinafter, are achieved by a method of conditioning and conserving filled dough food products, which comprises the steps of subjecting said filled dough food products to a high moisture environment at a high temperature, ranging from 70°C to 100°C, subsequently drying the product until the dough portion thereof reaches a moisture content level of 16 to 19%, packaging said filled dough food product under vacuum, and subjecting said packaged filled dough food product to a temperature in the 70°C to 100°C range.

The method according to this invention comprises a first step, wherein the filled dough food product, such as "ravioli", "tortellini", etc., being delivered by a conventional forming machine, is passed through a moist and hot environment, e.g. a saturated humidity environment at approximately 70—100°C, or through a hot or boiling alimentary liquid, such as water, broth, and the like. This step may last from 3 to 5 minutes where the product is passed through a vapor environment, e.g. over a boiling water tank in an enclosed environment, or from a few seconds to 2—3 minutes, where it is dipped in a boiling liquid.

Then the product is dried in a hot ventilated environment, until it reaches a residual humidity of 16 to 19 percent in the dough portion. These values have proved to be critical, because if not achieved, crumbling is likely to occur. Preferably, the drying process involves initial radiation of the product for 3 to 5 minutes with glowing lamps or electric resistors swept by an air flow, e.g. as generated by a blower fan placed behind them. Successively, the product is allowed to reach the desired final moisture content in a conventional drier for alimentary dough-based products.

The hot-wet-hot action of the cited treatment steps produces a surface gelling of the dough portion which, when dried to the required final moisture content, remains in a "soft" non-sticking condition which is retained throughout the subsequent treatments.

The product is then transferred to a vacuum packaging step, e.g. as carried out on a vacuum packaging machine for sausages. This step may be carried out under high vacuum conditions, or a given amount of an inert gas, such as nitrogen, may be introduced into the package. Preferably, the packaging material will be a flexible plastic film, suitable for food article use, such as polypropylene, PVC, various plastic laminates, etc.

The packaged product is then subjected to an after-packaging treatment, wherein it is passed through an overheated environment, at approximately 70 to 100°C.

For this purpose, cabinets or rooms may be used whereinto the packages to be treated are introduced after the temperature in such cabinets or rooms has reached about 35°C to 40°C. These enclosures (cabinets or rooms) are then closed tight and heat is applied until the desired treatment temperature is reached. As an example, a commercially suitable conservation of the product would require heating at about 90°C for approximately thirty minutes.

It should be noted that the above-described thermal after-treatment under vacuum develops an adequate bactericidal action without resulting in permanent dehydration.

In fact, following this treatment, the packages present themselves in a blown or swollen condition, with several condensation droplets adhering to the package inside. However, it has been found that such droplets are then re-absorbed by the product within 45—90 minutes, and the wrapping package loses its swollen condition to re-acquire the peculiar contracted condition of vacuum packages.

According to the invention, the dough portion should not have a thickness below 0.7 mm (0.0275 inches), because the heat applied to the product would otherwise melt the fat contained in its filler, which produces an undesired marble-like discoloration of the dough forming the fillter casing.

It has also been found that suitable dimensions for "ravioli" are 27×23×9 mm (1.063×0.905×0.354 inches) with a unit weight of 2.5 grams (0.088 ozs.); for "tortellini", the dimensions should be 28×26×14 mm (1.102×1.024×0,551 inches) with a unit weight of 4 grams (0.141 ozs.). It is anyhow advantageous that the "ravioli" comprise 60 to 70 percent dough and 40 to 30 percent filler.

After heat treatment, the packages are cooled by simply leaving them exposed to ambient temperature.

The treatments provided by the method according to this invention result in filled dough packaged products which can be conserved in perfect conditions over a period of over four months without developing any signs of deterioration, mold, etc. Thanks to the long conservation time afforded, the filler develops excellent taste qualities due to seasoning. The dough portion, as a result of the treatment undergone, is markedly non-sticking both relatively to adjacent "ravioli", "tortellini", etc. which it contacts during the aforementioned processing steps, and relatively to the film wherein it is packaged, thus greatly facilitating its handling during the treatment. It has also been found that the cited "softness" is neither lost during the application of high vacuum, nor during the heat after-treatment.

Furthermore, the product when packaged as described hereinabove, advantageously allows visual inspection of any inceptive deterioration thereof. In effect, the product deterioration is associated with the formation of fermentation gases which will inflate the package causing the same to become loose. This same loosening effect may also be an indication of defective sealing of the package, of package puncturing of faulty packaging, etc., and allows in any case such loosened package to be rejected upon a simple visual check.

It will be appreciated from the foregoing that the method according to this invention fully achieves its objects.

## Claims

1. A method of conditioning and conserving filled dough food products, comprising the steps of:

a) subjecting the filled dough food products to a high moisture environment, comprising a saturated humidity environment or a hot or boiling alimentary liquid, at a temperature ranging from 70 to 100°C;

b) drying the products until the dough portion has reached a predetermined moisture content level;

c) packaging said dried filled dough food products under vacuum; and

d) temporarily subjecting said packaged filled dough food products to a temperature in the 70°C to 100°C range, characterized in that said predetermined moisture content of the step (b) ranges from 16 to 19 percent.

2. A method of conditioning and conserving filled dough food products, according to Claim 1, characterized in that said high moisture environment comprises steam or water, or broth.

3. A method of conditioning and conserving filled dough food products, according to Claim 1, wherein the product is subjected, following the packaging thereof, to a temperature of 90°C for approximately 30 minutes.

## Revendications

1. Procédé de conditionnement et de conservation de pâtes alimentaires farcies comportant les étapes suivantes:

a) Soumission des pâtes alimentaires farcies à une température allant de 70 à 100°C dans un milieu ambiant à haute teneur en humidité;

b) Séchage du produit jusqu'à ce que la partie pâte ait atteint un taux d'humidité prédéterminé, caractérisé en ce que ledit taux d'humidité prédéterminé de l'étape b) se situe entre 16 et 19 pour cent et correspond à un milieu ambiant saturé en humidité ou à un liquide alimentaire chaud ou bouillant;

c) Emballage sous vide des pâtes alimentaires farcies séchées et,

d) soumission temporaire des pâtes alimentaires farcies emballées à une température se situant entre 70 et 100°C.

2. Procédé de conditionnement et de conservation de pâtes alimentaires farcies selon la revendication 1 caractérisé en ce que le milieu ambiant à haute teneur en humidité est la vapeur, l'eau ou le bouillon.

3. Procédé de conditionnement et de conservation de pâtes alimentaires farcies selon la revendication 1 selon lequel le produit est porté, après son emballage, à une température de 90°C pendant environ 30 minutes.

## Patentansprüche

1. Verfahren zur Aufbereitung und Konservierung gefüllter Teigprodukte, bei welchem

a) die gefüllten Teigprodukte einer aus einer feuchtigkeitsgesättigten Umgebung oder einer heißen oder siedenden Lebensmittelflüssigkeit bestehenden Umgebung mit hoher Feuchtigkeit bei einer Temperatur im Bereich von 70 bis 100°C ausgesetzt wird;

b) die Produkte getrocknet wird, bis der Teiganteil einen vorbestimmten Wert an Feuchtigkeitsgehalt erreicht hat;

c) die getrockneten gefüllten Teigprodukte unter Vakuum verpackt werden und

d) vorübergehend die verpackten gefüllten Teigprodukte einer Temperatur im Bereich von 70 bis 100°C ausgesetzt wird, dadurch gekennzeichnet, daß der vorbestimmte Feuchtigkeitsgehalt in Stufe b) im Bereich von 16 bis 19% liegt.

2. Verfahren zur Aufbereitung und Konservierung gefüllter Teigprodukte nach Anspruch 1, dadurch gekennzeichnet, daß die Umgebung mit hoher Feuchtigkeit aus Wasserdampf oder Wasser oder Brühe besteht.

3. Verfahren zur Aufbereitung und Konservierung gefüllter Teigprodukte nach Anspruch 1, bei welchem das Produkt nach seiner Verpackung einer Temperatur von 90°C während annähernd 30 min ausgesetzt wird.